(19) Europäisches Patentamt
European Patent Office
Office européen des brevets

(11) **EP 0 520 623 B1**

(12) **EUROPEAN PATENT SPECIFICATION**

(45) Date of publication and mention of the grant of the patent:
**08.10.1997 Bulletin 1997/41**

(51) Int Cl.$^6$: **G02F 1/1335**, F21V 8/00

(21) Application number: **92304799.7**

(22) Date of filing: **27.05.1992**

(54) **Light-leading panel for surface lightening and a surface-lightening body**

Lichtleitende Tafel zur Flächenbeleuchtung und Gerät zur Flächenbeleuchtung

Panneau à guide de lumière pour éclairage de surface et dispositif d'éclairage de surface

(84) Designated Contracting States:
**DE FR GB IT**

(30) Priority: **27.06.1991 JP 183659/91**
**06.12.1991 JP 108969/91**
**28.02.1992 JP 78890/92**

(43) Date of publication of application:
**30.12.1992 Bulletin 1992/53**

(73) Proprietors:
• **NISSEN CHEMITEC CO., LTD.**
**Niihama-shi, Ehime, 792 (JP)**
• **T. CHATANI & COMPANY LTD.**
**Chuo-ku, Osaka-shi, 541 (JP)**

(72) Inventors:
• **Tawara, Nobuyoshi**
**Niihama-shi, Ehime, 792 (JP)**
• **Kojima, Takeshi**
**Tondabayashi-shi, Osaka, 584 (JP)**

(74) Representative: **Whalley, Kevin**
**MARKS & CLERK,**
**57-60 Lincoln's Inn Fields**
**London WC2A 3LS (GB)**

(56) References cited:
**EP-A- 0 213 688        EP-A- 0 355 064**
**DE-A- 3 208 162        DE-A- 3 208 162**
**DE-A- 4 008 953        FR-A- 2 642 209**
**US-A- 4 945 350**

• **IBM TECHNICAL DISCLOSURE BULLETIN vol. 33, no. 1B, June 1990, ARMONK, US pages 237 - 238 , XP122874**

## Description

This invention relates to a light-guiding panel for back lighting of various types of apparatus equipped with liquid crystal displays, in particular, televisions, lap-top personal computers, word processors, computer game devices, etc.; or for a system for displaying various information or an advertisement; and further relates to a surface-lighting assembly with such a light-guiding panel.

Displays and analogous indication equipment provided with liquid crystal are characterised by low electric power consumption and small thickness. For such reasons they have hitherto been used as the displays of digital watches or clocks and electronic calculators, but recently they have started to be practically used instead of cathode ray tubes (Brown's tube), depending on recent explosive progress in thin membrane formation technics. Thus, it is presumable that liquid crystal displays will become the main image indicator in the near future.

However, since a liquid crystal itself does not emit light, it is necessary to illuminate it from behind in order to visualize the images formed by fine liquid crystals. Thus, now practised as comparatively average illuminance is a surface-lighting body made from single or plural (laminated) flat plate(s) made of polymethyl methacrylate (commonly called "acrylic plate") with printed white dots on one or both of its surfaces) as light-scattering means.

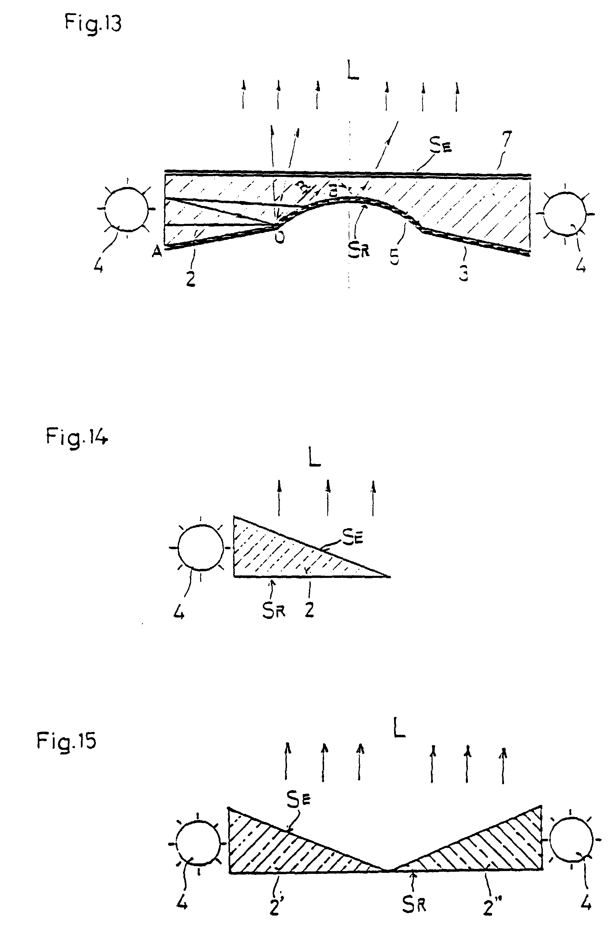

However, since the common plane light-guiding panel is thin, its thickness being insufficient to catch much of the light directed towards its edge surface of its edge, it is low in averaged luminance. Thus, it is only useful as a light-guiding panel for a black- and-white image. Thus, a wedge-shaped light-leading panel as shown in Fig. 14 has been proposed. However, in such a single wedge-shaped light-guiding panel, it is necessary to increase enough the thickness of its base edge in order to increase the amount of incident light, but this, on the contrary, makes larger the inclined angle of the slant surface so as to shorten the breadth of the light-guiding panel and, thus, only a narrow (up-to-down) image area can be obtained. In this circumstance, a set of light-guiding panels in which two individual panels are arranged confrontedly at their acute angle portions (a symmetrical wedge-shaped panel), as shown in Fig. 15, has been proposed. According to this construction, it is possible to broaden the image area and to strengthen the intensity of luminosity by arranging double light sources (such as cold cathode discharge tubes) at both edges of this set of light-guiding plates.

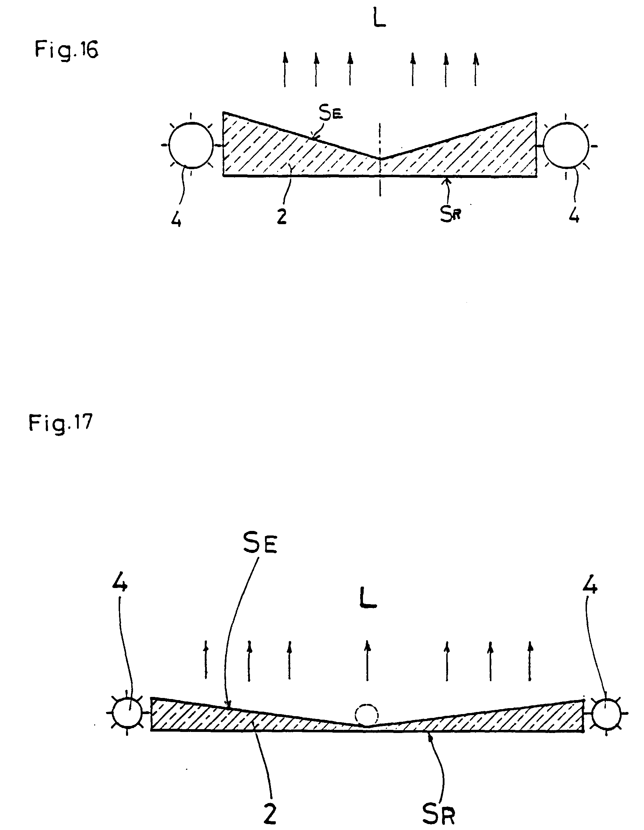

However, this confrontation of the two wedge-shaped light-guiding panels causes a defect that a brilliant line is seen along with the confronted line due to increase of light reflection at such confronted part and this defect can not be solved by decreasing the density of the dots at the confronted parts of the panels. Moreover, this defect can still not be solved even if the acute edges of the panels have been cut off as in Fig. 16, whereby there will become visible a dark line instead of the brilliant line in the former case. Furthermore throughout any known light-guiding panels, there is a problem that the luminosity obtained is uneven.

Thus, more recently, an improved light-guiding panel of Fig. 17 in which the confronted part of two wedge-shaped light-guiding panels is shaped to a small arc has been proposed (DE-A-32 08 162). But, unevenness in the luminosity has not been solved.

In these circumstances, such symmetrical wedge-shaped light-guiding panel has not been practised, notwithstanding its merit of high luminosity and broad image area.

DE-A-32 08 162 discloses the pre-characterising part of claim 1.

US-A-4 945 350 discloses a light guiding plate in which each of its faces has a concave portion in order to enhance uniformity of brightness. However, the shape of the face is not further explained or accurately described.

DE-A-40 08 953 (and corresponding US-A-5 123 077) discloses a light-guiding plate having a roughened light-emitting face with a narrow part-cylindrical concave middle portion continuously connected to two convex side portions. The opposite, planar, reflecting face is also roughened. A middle region of the light-emitting face or of the reflecting face (corresponding to the concave middle portion of the light-emitting face) has only a small degree of roughness. This is said to decrease the brightness in the middle so that uniform surface lighting may be obtained.

The object of the present invention is to provide a practical light-guiding panel having high averaged luminosity and broad image area in which the generation of the brilliant or dark line which is the defect of the known symmetrical wedge-shaped light-guiding panel is eliminated.

Moreover, the present invention is further directed to the provision of a compact surface-lighting system by decreasing the weight and volume of the lighting body, not only accommodating the trend of the present era towards "light-thin-short-small" but also making it possible to set an IC (integrated circuit) substrate into the space thus provided by the minimization of the panel.

The present invention provides a light-guiding panel as set forth in claim 1.

Preferred and optional features are set forth in the subsidiary claims.

The invention will be described further, by way of example, with reference to the accompanying drawings.

The term "section" used hereinafter means vertical section.

Fig.1 is a schematic section view of the solid-type light-guiding panel according to the present invention.

Fig.2 is an explanatory section view of an example of a solid-type light-guiding panel of the present invention.

Fig.3 is an explanatory section view of another example of a solid-type light-guiding panel of the present invention.

Fig.4 is a section view of further example of a solid type light-guiding panel of the present invention.

Fig.5 is a section view of a surface-lightening body by composing an invented solid-type light-guiding panel according to the present invention.

Fig.6 is a plan view showing the positions at which the measurements of the luminosity were carried out.

Fig.7 is a partially cut-away section view of a surface-lighting body with an image indication system by composing an invented solid-type light-guiding panel according to the present invention.

Fig.8 is a partially cut-away section view of another surface-lighting body with an image indication system which is composed by a solid type light-guiding panel according to the present invention.

Fig.9 is a section and explanatory views of a quasi(pseudo )-symmetrical wedge-shaped light-guiding panel composed of four planes.

Fig.10 is an explanatory view showing the behavior of the light at the light-emission surface in a light-guiding panel composed of two planes intersected together.

Fig.11 is another explanatory view showing the behavior of the light, wherein the center of the light-guiding panel is a symmetrical concavity with two planes which is not tangentially adjoined thereto.

Fig.12 is a section and explanatory views of the behavior of the light at the light-emitting surface in a light-guiding panel composed of a concavity and a tangential plane adjoined thereto.

Fig.13 is another explanatory view and a section view showing the behavior of the light where in the case in which the light is emitted off from the plane face of the panel of Fig.11.

Fig.14 is a diagrammatic section view of known wedge shaped light-guiding panel.

Fig.15 is a diagrammatic section view of a symmetrical wedge-shaped light-guiding panel, wherein a pair consisting of two unit light-leading panels of Fig.14 are confronted each other at their sharp acute apexes.

Fig.16 is a similar figure with Fig.15, but in which each apex being cut away.

Fig.17 is a modification of the light-guiding panel of Fig.16 in which the confronted part of the both panels is rounded to a small circular arc.

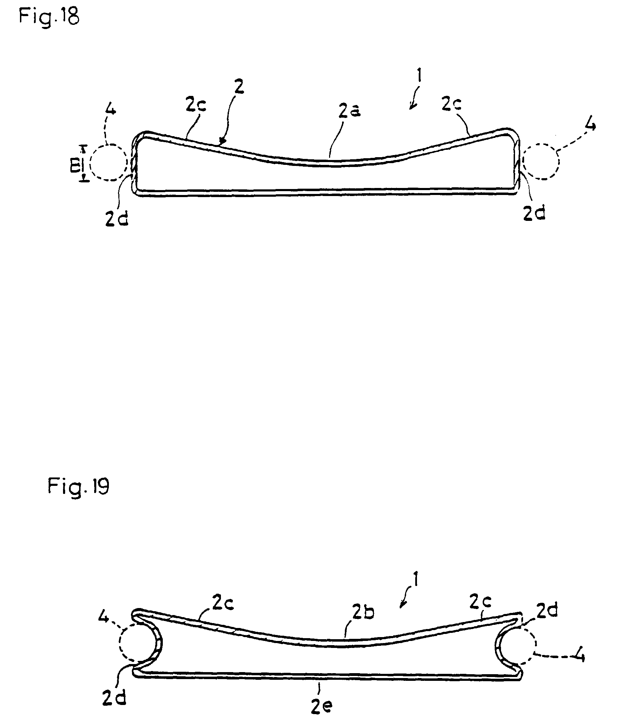

Fig.18 is a diagrammatic section view of another surface lightening body with a hollow light-guiding panel according to the present invention.

Fig.19 is a diagrammatic section view of another hollow light-guiding panel according to the present invention.

Fig.20 is a partial section view showing the principle of the hollow-type light-guiding panel according to the present invention.

Fig.21 is another partial and enlarged section view showing the principle of the hollow-type light-guiding panel according to the present invention, and,

Fig.22 is a diagrammatic section view showing an example of the lighting body according to the present invention.

## (1) Light-guiding Panel

### (1a) Optical Transparency

The term "optically transparent" means property permeable to visible lights(of *ca.*400-700 nm of the wave lengths) without scattering. Naturally, since we have still no such material of 100% light permeability, this term may be regarded as synonymous with "clear" in our common sense. Optical glass is a typical transparent material, however, particularly preferred for this invention is transparent plastics such as polymethyl metacrylate, methyl metacrylate=styrene copolymer or polystyrene, *inter alia*, castable and transparent organic glass. The organic glass is desirable for carrying out the invention because it is not only light, of 1/2 or less in the specific weight than inorganic glass and hardly to be broken but also castable corresponds to the inner shape of the cast used.

Alternatively, any glassy materials including heterogeneous fine particles or fine bubbles such as opaque glass or foamed glass are improper as the material of the light-guiding panel, because although they transmit the incident light, but excessively attenuate the intensity of the light of incidence which is parallel to the faces of the plate.

### (1b) Concave face and Concave-Plane Face

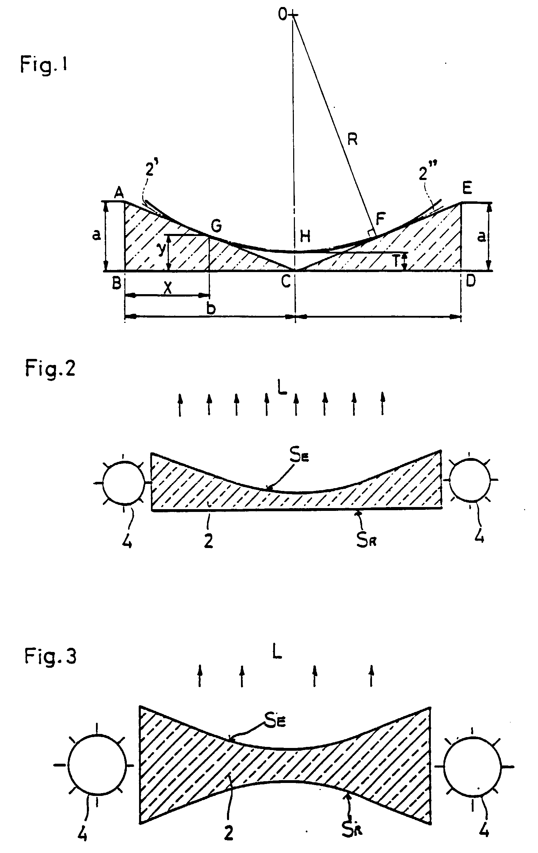

The term, in this invention, "concave face and concave-plane" means that the shape of the section of the light-guiding panel along with its length or breath-wise direction is a shape in which a symmetrical circular arc or conical arc(such as a parabolic or an elliptic arc) contacts with or circumscribes with either the apexes A and E or the slants AC and EC in the two symmetric rectangular triangles (symmetric wedges) CBA and CDE on a common basic line B-C-D as shown in Fig.1. As clearly understandable from the above figure, if the points of the contact are at the apexes A and E of each triangle, the shape thus formed is a concavity. On the other side, if the circumscribed points are on the slants AC and EC of each triangle, the face formed is any of symmetrically synthesized face (hereinafter called as "concave-plane") which is composed of asymmetric concavity and two planes tangentially adjoined thereto.

In the Figs.1 and 2(hereinafter, symbols, **"2"**, **"4"**, **"S$_E$"** and **"S$_R$"** commonly mean "light-leading panel", "light source", light-emission face of the symbol 2 and the light-reflecting face of the same, respectively throughout all the attached drawings), the central concave portion (expressed by a solid line) is a circular arc, wherein the radius(R) of the tangential circle can be calculated according to the Formulae I, below, when the thickness and breadth of each symmetric wedge-shaped panel 2', 2" are a and b, respectively at the thinnest portion at the center is T.

[Formulae I]

$$\angle\,O\,F\,C = \angle\,E\,D\,C = 90° \qquad\qquad \text{I-1}$$

$$\angle\,O\,C\,F + \angle\,E\,C\,D = 90° \qquad\qquad \text{I-2}$$

$$\angle\,C\,O\,F + \angle\,O\,C\,F = 90° \qquad\qquad \text{I-3}$$

From formulae I-2 and I-3,

$$\angle\,C\,O\,F = \angle\,E\,C\,D \qquad\qquad \text{I-4}$$

And, $\triangle$C O F and $\triangle$ E C D are similar from formulae I-1 and I-4, and a, b, and T are conditions given.

Thus, from the above figures,

$$(R + T) : R = \sqrt{a^2 + b^2} : b \qquad\qquad \text{I-5}$$

$$R\sqrt{a^2 + b^2} = R\,b + T\,b \qquad\qquad \text{I-6}$$

$$R = \frac{Tb}{\sqrt{a^2 + b^2} - b} \qquad\qquad \text{I-7}$$

However, there are numerous concave-planes which satisfy the above conditions a, b, and T given other than the above equation I. Thus, if c is defined as 0<c<T, the concave-plane defined will be given according to the equation I-8, below. As the smaller the value of T-c, the smaller the radius R of the circumscribed circle, and the circumscribing point will approach to the center.

$$R = \frac{(T-c)\,b}{\sqrt{(a-c)^2 + b^2} - b} \qquad\qquad \text{I-8}$$

(Provided 0<c<T)

Alternatively, if the concavity is parabolic(shown by a chained line in Fig.1), the conditions that said the parabolic curve will circumscribed with the both slants of the symmetric wedge-shaped panel can be given by the following Formulae II.

[Formulae II]

$$y_1 = \frac{a}{b}\,x \qquad\qquad \text{II-1}$$

$$y_2 = \alpha\, x^2 + T \qquad\qquad \text{II-2}$$

(wherein T is the thickness at the thinnest portion.)

When the Formula II-2 is inscribed with ther Formula II-1, the value of $\alpha$ can be calculated as follows:--
The co-ordinate of the point of the intersection.

$$\frac{a}{b}\, x = \alpha\, x^2 + T \qquad\qquad \text{II-3}$$

From the tangential conditions,

$$\left[\frac{a}{-b}\right]^2 - 4\,\alpha\,T = 0 \qquad \therefore \quad \alpha = \frac{1}{4\,T}\left[\frac{a}{b}\right]^2 \quad \text{--- II-4}$$

$$\therefore \quad y = \frac{1}{4\,T}\left[\frac{a}{b}\right]^2 x^2 + T \quad \text{------ II-5}$$

The co-ordinates of the tangential line.

$$\frac{1}{4\,T}\cdot\frac{a^2}{b^2}\, x^2 - \frac{a}{b}\, x + T = 0 \qquad\qquad \text{II-6}$$

$$\frac{a^2}{b^2}\, x^2 - \frac{4\,T\,a}{b}\, x + 4\,T^2 = 0 \qquad\qquad \text{II-7}$$

$$\left[\frac{a}{b}\, x - 2\,T\right]^2 = 0 \quad \text{----------------------- II-8}$$

$$\therefore \frac{a}{b}\, x = 2\,T \qquad x = \frac{2\,T\,b}{a} \qquad\qquad \text{II-9}$$

Thus, y is:

$$y = \frac{a}{b}\left[\frac{2\,T\,b}{a}\right] = 2\,T \quad \text{--------- II-10}$$

But, there are numerous parabolas which satisfy the above conditions a,b and T, and further the circumscribe with the both slants of the symmetrical wedge-shape panel. Thus if c is defined as 0<c<T, the above genetic formula II-5 is modified into the undergoing formula II-11, and the circumscribing point will approach to the center as the value (T-c) will become smaller.

$$y_2 = \frac{1}{4(T-c)}\left[\frac{a-c}{b}\right]x^2 + (T-c) \quad \text{----} \, \mathrm{II}-11$$

Other than the above, there are numerous curves which can be expressed by mathematics, for example, any conical arc such as hyperbola or elliptic arcs, curves of trigonometric function, catenary(hyperbolic cosine curves), curves of cycloid, curves of trochoid, expornential curves,involute curves ,asteroid etc.,and therefore, we can freely select any curve as far as it is of symmetry, convex to downward and is one-dimensionally increasing function-wise curve(means the curve not having their maximum and minimum values between form the center (for example, the point C in Fig.1) to the circumscribed point).

However, complicated curves require troublesome calculation for deciding the circumscribed points and positions of each point on the concavity in addition to the large amount of work for drawings at its manufacture. In this connection, it is desired in practical considerations of the easiness of the manufacture and simplicity of the dotting by print that the concavity is designed according to a circular or conical arc.

Especially, as in Fig.1 and 2, the face synthesized from a centric circular arc face and peripheral tangential planes adjoined to the former(the concave-plane) is better in view of easiness in the design of the pattern to be printed which derives expected homogenity of the luminosity. Particularly, the one having a parabolic face as the concavity is preferable in viewpoints that higher and more averaged luminosity than corresponding face of a circular arc.

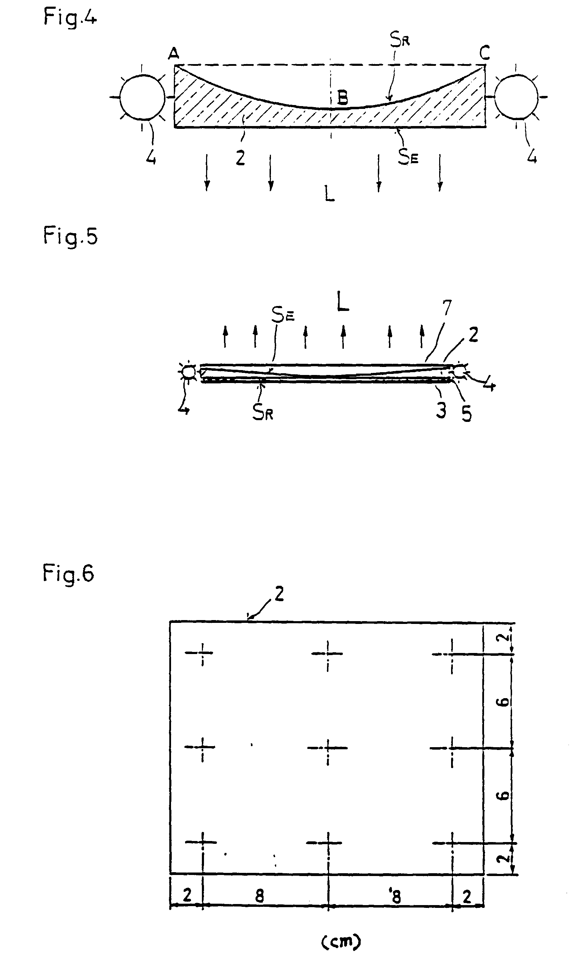

But, the entire concavity as shown in Fig.4 (in which the face is composed of a circular arc) is also preferable in view of effective utilization of the space surrounded by the points ABCA in this figure. Thus, whether or not the face is entirely composed of a concavity or a synthesized from a concavity with the tangential plane(the concave-plane) and how to decide the numerical value of the curvature the shape of said concavity should be determined according to the characteristics to be expected for the light-guiding panel as the back light.

When the invented light-guiding panel is composed of a concave-plane, it must be needed that the central concavity and the peripheral planes satisfy a specific proportion. That is, preferred to Fig.1, the distances C-G and C-F from the confronting apexes of the both triangles C to the points of the contact G and F with the curve 3(wherein this curve is explanatorily shown as a circular arc with a radius OH from the centric point 0) should be 1/10 or longer, preferably, 1/5 to 2/3, of the length of the slants CA and CE of the triangles CAB and CED. If the distance is less than 1/10 of the lengths of said slants,there can hardly be obtained desired homogenity in luminosity.

Additionally, the concave-plane is generally provided at one side of the panel but the both sides of the panel may be composed of the concave-plane as shown in Fig.3, if desired.

(1c) Thickness of the Panel

In the light-guiding panel according to the present invention, the thicker of the thickness of the both sides composed of the concavity or the concave-plane,the larger of the amount of the light to be crawled into the panel. Thus, it is preferred that said thickness is large enough, particularly, so as to allow to hole through holes for disposing cold cathode discharge tube adjacent to the both sides of the panel.

Alternatively, the light-guiding panel according to this invention may be composed as a hollow body as in Examples 4 and 5 hereinafter set forth. Such hollow panel not only has unexpectedly good performance irrspective of the existence of the intermediary air layer but also much lighter and easier to be prepared than the solid one.

(2) Preparation of the Light-guiding Panel

The light-guiding panel of the present invention may be prepared by pouring a casting material such as methyl metacrylate into a mold assembled by easily-separable material such as polished stainless steel with the catalyst, heating for hardening, annealing, taking out the molded article from the mold, and then cutting and polishing the peripheral parts of the article, if need be. If desired, a flat plate of organic or inorganic glass may be grind and polished so as to form necessary concavity or concave-plane, however, this is inferior than casting in the producibility. Additionally, polymethyl metacrylate resin may, theoretically, be molded by an injection molding since this resin has plasticity. Besides, if the light-guiding panel is formed as the hollow body, it can be made by bending or pressing acrylic plate at a temperature higher than its glass transition point in or with an appropriate shaping molds.

(3) Surface Lighting Body

The above light-guiding panel according to the present invention is then processed to an aimed surface-lighting body by forming a reflecting face at the one side(generally at the flat face) of the panel by the attachment of a reflecting material such as a mirror or aluminum foil or by the deposition of fine silver particles through a silver mirror reaction or by spattering on the one side of the panel as well as a light-scattering plate arranged on the other face (mainly on the concavity or the concave-plane), and there are further provided fine dots with white paint at least at one face selected from the reflecting face and the light-scattering face (light-emitting face) of the light-leading panel. Besides, the light-scattering plate may be apart from the convex face of the light-guiding panel as explained in the aftergoing Embodiment 1 (Refer to Fig.5.). Moreover, the complementary use of fine prismatic plate or Fresnel lens plate will be effective to improve the luminosity, but it has some defect whereby undesired glittering will be increased.

(4) Light Source

As the light source, it is preferred linear light source such as a fluorescent lamp or cold cathode discharge tube. Especially, the latter is most desirable at nowadays because of its comparatively small diameter and large luminous energy per unit length, and of coolness when it is lightening (almost does not generate heat). But, since it can not be derived by 100 v,AC, there is necessary to further provide a high voltage electric power supply. A white dotty light source such as crypton lamp, xenon lamp or halogen lamp etc. may also be available, but they are inferior as the light source than the linear light source because they must be used as a set of a number of unit lamp, generate heat and have a comparatively short life.

(5) Disposition of the Light Source

As mentioned in the above, it is beneficial for effectively utilize the incident light from the light source, if the thickness of the edges of the light-guiding panel is equal to or larger than the outer diameter of the light source. Particularlly, if the panel has(have)(a) large through hole(s) at the inside of its thick portion into which there can be is inserted a cold cathode discharge tube, maximum efficiency will be expected. The outer diameter of cold cathode discharge tubes now marchandized is 3-8 m/m. Thus, if the inner diameter of the through hole(s) is(are) designed so as to exactly fit with the tube used, almost light energy from the source is incident into the inside of the light-guiding panel because there is few difference between the organic glass composing said light-leading panel and inorganic glass composing said discharge tube in their light refractive indexes.

(6) Function and Operation

The light-guiding panel of the present invention almost does not generate any brilliant line much different from known symmetrical wedge-shaped light-leading panel or a modification thereof composed of a synthesized concave-plane consisting from a concavity and planes which are not tangentially adjoined thereto. This remarkable difference can be explained as follow:----

(6a) Mechanism of the generation of the brillant line in a complex face composed of a plane and another plane crossing each other.

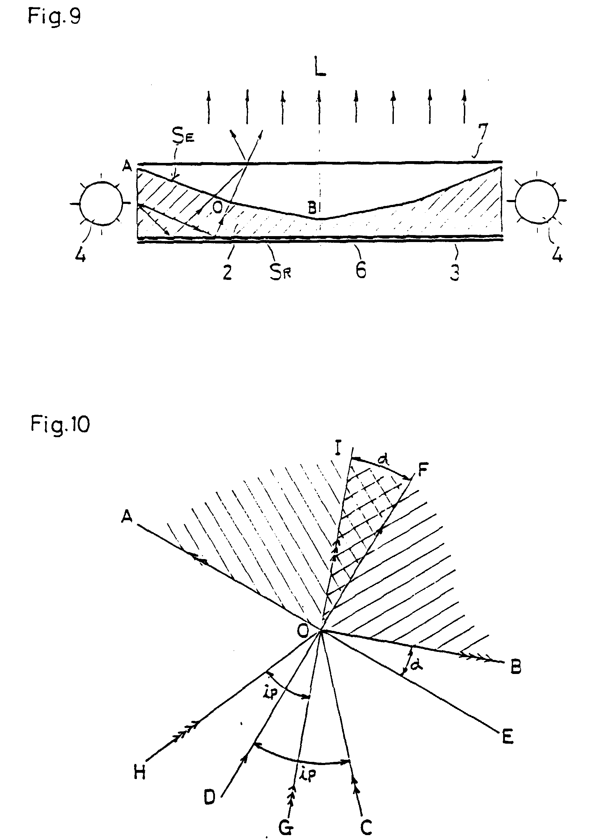

First of all, we discuss the mechanism of the generation of the brilliant line by referring Fig.10. Namely, if the light-emitting face is a bent plane formed by crossing two planes as in Fig.9, the downward portion beneath symbols(face) AOB is the interior of the light-guiding panel and the upward portion above said symbols becomes air layer, and the incident rays from the edge face of the panel are emitted off from the interior of the panel (beneath the face AOB) to the air layer (above said face AOB).

Then, giving attention to rays emitted from the plane face AO and dropping a perpendicular line DOF to said face AO at the point **0**, all the rays(luminous fluxes) having an angle smaller than the critical angle $i_p$(in polymethyl metacrylate, this angle is about 42.1°), that is, the incident rays within $\angle$ COD are emitted from the point **0** off and thus refracted rays are emitted into $\angle$ AOF off. Similarly, among the rays emitted from the face OB, all the rays having a angle smaller than the critical angle $i_p$ ( $\angle$ HOG) will be emitted off within $\angle$ BOI as the refracted light. As understood by Fig.10, the refracted light within $\angle$ FOI are of a synthesized lights of the rays from the face AO with that of another plane face BO which is inclined to the face OA. Thus, the intensity of the rays at this point **0** is the total of the rays from the plane faces AO and BO where its luminosity(cd($^{cd}$/m$^2$)) is greater than the average luminosity of each face and equal to or smaller than the arithmetical total of the both as shown by the following Formula III.

[Formula III]

$$\frac{\text{Luminosity on the face } \underline{OA} + \text{Luminosity on the face } \underline{OB}}{2}$$

$$<cd \leqq \text{Luminosity on the face } \underline{OA} + \text{Luminosity on the face } \underline{OB}$$

Thus, the luminosity of the light-emitting face within $\angle$ FOI becomes remarkably greater than those of the faces $\underline{OA}$ or $\underline{OB}$ whereby the brilliant line will be generated. Of course, the groups of the rays(the luminous flux) have some breadth, therefore, a more brilliant line than the other faces but not focused is appeared along with the crossed bent plane. Here, $\angle$ FOI is equal to the crossed angl $\angle$ FOB($=\alpha$). Thus, if said $\alpha$ is gradually decreaed, the face $\underline{OB}$ is lain with the face $\underline{OA}$ so as to form a plane $\underline{AOE}$ in which $\alpha$=O. Thus, $\angle$ FOB($=\alpha$) becomes 0 and the brilliant line will be vanished. In this way, if two light-emitting planes are adjoined through a bent planes in Fig. 9, then a brillant line with some breadth will necessarily be seen at the part of said bent line between said both planes.

(6b) Mechanism of the generation of the brillant line in a face composed of plane and a concavity

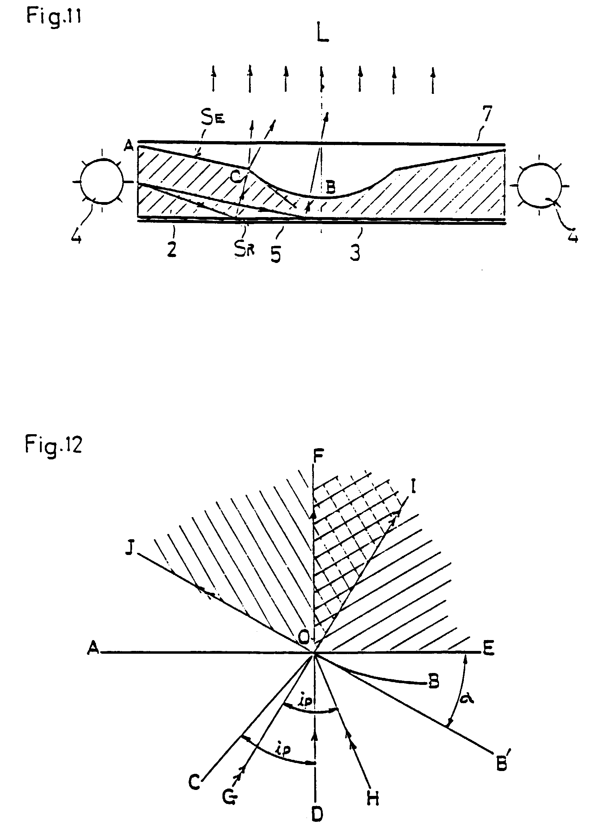

The mechanism of the generation of a brilliant line in a face composed of a plane face $\underline{OA}$ and a concave face $\underline{OB}$ which are adjoined each other intermittent with a straight line may be presumable as similar as the above(6a)(cf. Figs. 11 and 12). Namely,the emitted rays at the point **0** among the rays emitted from the plane $\underline{OA}$ off will be emitted as a refracted light within $\angle$ FOE so long as the incident angle is smaller than the critical angle($i_p$).

On the other side, there is applicable the same optical principle as aforementioned as to the tangential plane $\underline{OB'}$ at the point **0** in the concavity $\underline{OB}$ in connection with the light emission at the point among the light emitted from said concavity $\underline{OB}$. Then, dropping a perpendicular line IOG to the tangential plane OB' from the point **0**, all the rays(luminous flux) having an angle smaller than the critical angle $i_p$($=\angle$GOH )are will be emitted as the refracted light in $\angle$ FOI. As seen from Fig.12, all the refracted light in $\angle$ FOI is composed of mingled lights, a light from the plane $\underline{OA}$ with one from the concavity $\underline{OB}$ within $\angle$ FOI and the intensity of the rays at this point **0** is the total of the rays from the faces $\underline{OA}$ and $\underline{OB}$ where its luminosity cd($cd/m^2$) is greater than the average luminosity of each face and equal to or smaller than the arithmetical total of the both as shown by the following Fromula IV

[Formula IV]

$$\frac{\text{Luminosity on the face } \underline{OA} + \text{Luminosity on the concavity } \underline{OB}}{2}$$

$$<cd \leqq \text{Luminosity on the face } \underline{OA} + \text{Luminosity on the concava } \underline{OB}.$$

Thus, the luminosity of the light-emitting face within $\angle$ FOI becomes remarkably greater than those of plane face $\underline{OA}$ or concave face $\underline{OB}$ whereby the high brilliant line will be generated. This angle FOI is equal to the crossed angle FOB' ($= \alpha$) between the plane $\underline{OA}$ and the tangential plane $\underline{OB'}$ at the point **0** which is the junction with the concavity $\underline{OB}$. Therefore, if this angle is gradually decreased, at last the face $\underline{OB'}$ is lain with the face $\underline{OA}$ so as to from a plane $\underline{AOE}$ wherein $\alpha$=0. Thus, if the light-emitting face is composed of a concave-plane in which the plane $\underline{OA}$ is tangentially connected to the concavity $\underline{OB}$, in other word, the light-emitting face is composed of a plane and a tangential plane adjoined thereto at the junction **0**, any the brilliant line will be vanished. And this is generally applicable to any concave-plane composed of a circular arc or parabolic arc and planes tangentially connected to the arcs.

(6c) Mechanism of the generation of the brillant line when the light is emitted from the plane face of the light-leading panel off.

The mechanism explained in the above paragraph (6b) is on a case where the light-emitting face is a concave-plane and the light-reflecting face is a plane. However, in practice, as seen from Fig.13, the emitting face and the concave-plane become the light-reflecting face(with a light-reflecting material such as mirror or the like). In this case, the emitted rays(the luminous fluxes) will be incident into the light-leading panel again and re-emitted from the plane side through repeated refraction, transmission and reflection. The rays once have converged to from the brilliant line are not entirely dispersed away through the above processes and emitted from the plane face as a somewhat vague brilliant line.

However, even in this case, if the light-reflecting face is composed of a concavity or a a concave-plane, there can not be seen brilliant line due the reason hereinafter explained( Referred to the aftergoing Embodiment 2).

Additionally, the light transmittability of light-leading panel is approximately proportion to the thickness **y** at the distance **x** from the edge face(<u>AB</u> or <u>ED</u>) in Fig.1. On the other side, provided that the thickness is a the edge face, the thinnest thickness at the central portion is T and the breadth is 2b (b in a wedge-shaped panel) of the light-guiding panel, respectively, the thickness at the section **y** in the light-guiding panel defined according to the above paragraph (1b) is usually **y** > **y'** wherein **y'** is the thickness at the point **x** of the concave panel having the same curvature. Thus, the light-guiding panel having a concave-plane face defined at the paragraph(1b) has greater light transmittability than that having a simple concave face, if the other conditions are the same. Therefore, if both the largeness and the maximum thickness are equal, the light-guiding panel of concave-plane type is better than that of the simple concave type. However, for disposing an IC substrate into the concavity as shown by the aftergoing Embodiments 2 and 3, the simple concave-type panel is preferable. As has previously been mentioned, through hole (s) excavated into the panel for disposing cold cathode discharge tube is(are) effective to utilize light from the light source without loss.

(6d) Mechanism of hollow light-guiding panel

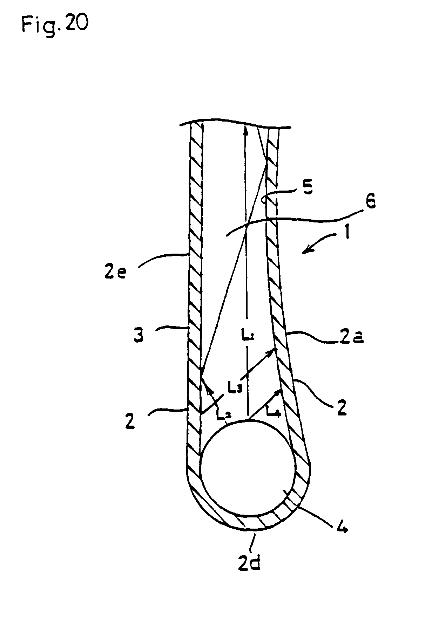

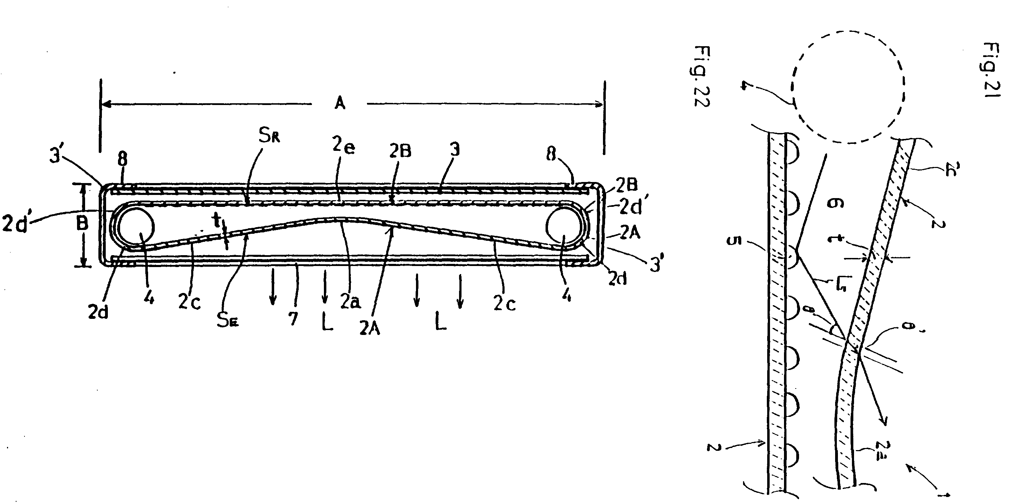

In the hollow light-guiding panel according to the present invention, it acts so as to prevent the generation of the brilliant line as in the solid-type light-leading panel set-forth in the above. Namely, referred to Fig. 20, among the light emitted from the light source **4**, the luminous flux $L_1$ which goes along with the axis leaks toward the outside of the system, but the other fluxes $L_2 \sim L_4$ are either directly reflexed at the inner face of the bottom wall **2e** of the light-leading panel **2** (when it is greater angle than the critical angle; $L_2$), or collide with the light-scattering dots **5,5** ... and light them after return back into system through reflection at the reflection layer **3** and through refraction(when it is smaller angle than the critical angle; $L_3$) or directly collide with said dots so as to light them( $L_4$). In these ways, also in this surface-lighting body comprising of solid type light-guiding panel there is not arisen local concentration of luminous flux which cause the brilliant line because the light reflection or light emission face is composed of a symmetric concavity or concave-plane alike the solid-type one, irrespective of the presence of the inner air layer, and moreover, it is unexpected that there can hardly been seen depression in the luminosity which is presumable as the result of the total reflection caused by intermittence of a different refractive medium, that is, inner air layer 6. This result may be explained as the ray $L_5$, as seen from Fig.21, when the thickness of the light-guiding panel is T, the ray $L_5$ which collides with the said panel with the incident angle θ will be emitted wholly with the departure of T mm as shown by the Formula V, below.

[Formulae V]

$$T = t \, \frac{sin(\ \theta - \theta')}{cos\ \theta'} \qquad\qquad \text{V-1}$$

$$\frac{sin\ \theta'}{sin\ \theta} = \frac{1}{1.414} \qquad\qquad \text{V-2}$$

(wherein t is the thickness of the light-leading panel, θ is the incident angle, and θ' is the refractive angle.)

But, if the incident angle is large, the ray $L_5$ becomes parallel light to the plane portion **2e** of **2** so that it does not contribute to the luminosity. Thus, if the concave face(**2a~2c**) is used as the light emitting face as in the aftergoing Embodiment 4, the average luminosity becomes lower than that of the case, wherein the plane face **2e** is used as in the after going Embodiment 6. Thus, it is preferred to apply the mode of Embodiment 6,if this hollow light-guiding panel is used as the surface lightening body.

**EXAMPLES**

Now, the invention is more fully and concretely explained by the foregoing embodiments, but they are for illustration only and not for limitation.

Embodiment 1

An acrylic light-guiding panel **2** of 6 mm in thickness at its edge face, 16 cm in the breadth, 20 cm in the height and 1 mm in the thickness at its central thinnest portion. The radius of the tangential circle was 35.63 cm from Formulae I. Then, as seen from Fig.5, there were printed a lot of fine dot **7** with white paint and then sticked reflecting sheet **5** up to the plane face(the backside face)of this panel **2**,respectively, and there was followed by covering the front face (the concave face) with a light-scattering sheet **7** to obtain aimed light-guiding panel of 119.6 g in weight which corresponds to 52.4 % by weight of entire flat plate of 6 mm thickness. Thus, in this way, the weight of known plane light-guiding panel was decreased down to about one-half.

The luminosity of this panel lighted with light sources (cold cathode discharge tube)was measured at its nine spots on this panel as shown by Fig.6.

Thus, there was obtained the average luminosity is 2050 $^{cd}$/m$^2$ with 93 % homogenity without any generation of the brilliant line visible in which the homogenity was calculated by the following Formula VI.

[Formula VI]

$$Homogenity(\%)= \frac{Minimum\ luminosity}{Maximum\ luminosity} \times 100$$

Embodiment 2

Clear acrylic plate of 10 mm thickness at its edge face, 16 cm in the breadth and 20 cm in the height is shaped to a parabolic face having 2 mm thickness at it thinnest portion with NC(numerically controlled) lathe according to the Formulae II(wherein y=0.0195 x$^2$+0.2). The obtained (a parabolic panel)was processed as similar as Embodiment 1 except that the dots **7** was applied to the concave face, and the scattering and reflecting sheets were applied to the reverse side with that of Fig. 5(that is,applied onto the plane face). The luminosity of this panel was 2150 $^{cd}$/m$^2$ and the homogenity was 95 % depends on the same manner with Embodiment 1.

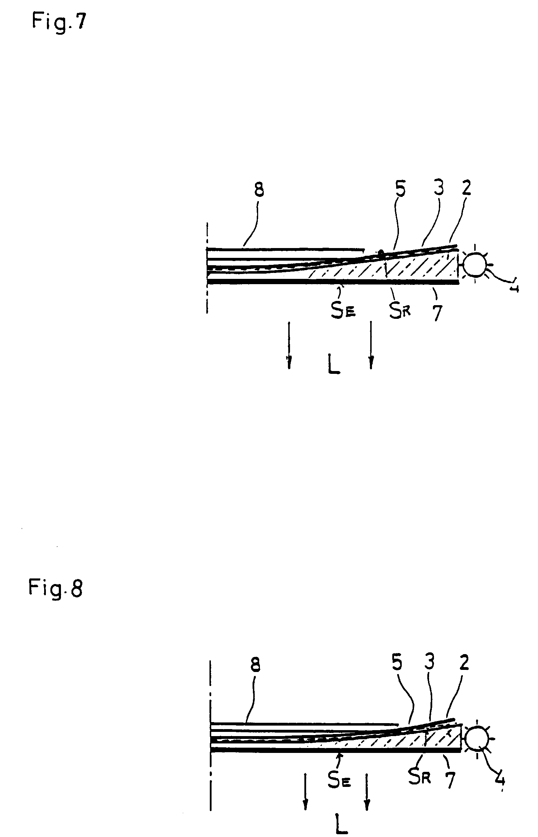

Additionally, the weight of this panel was 205.5 g which corresponds to about 52.7 % by weight as compared with that of flat acrylic plate of 10 mm thickness(380.8 g). Thus, not only 47.3% by weight was decreased down but an IC substrate 8 of 3.75 mm of the thickness, 100 mm of the breadth and 200 mm of the length could be inserted into the concavity as in Fig.7.

Embodiment 3

Another acrylic light-guiding panel having circular arc face at its one-side and of 8 mm thickness in the edge face, 160 mm in the width, 200 mm in the height and 2 mm thickness at the central portion was prepared and was dotted on its concave face, followed by sticking up a scattering sheet on its plane face and a reflecting sheet on its concave face, respectively.

The luminosity measured was 2050 $^{cd}$/m$^2$ with 85 % homogenity. And, there could be disposed an IC substrate **8** of 3.75 mm, 100 mm and 200 mm, its thickness, breadth and length, respectively, into the concavity.(See Fig. 8).

Moreover,the weight of this light-guiding panel was 152.3g correspond to just one-half of plane light-guiding panel having equal largeness(weight 304.6 g). Thus, the weight of plane light-guiding panel could be decreased down to one-half by this changing to concave shape.

Embodiment 4

Fig.22 is a diagrammatic section view of a hollow-type surface-lighting body according to another embodiment of the present invention.

The light-guiding panel **2** as the main part of this equipment is composed by assembling a concave-plane member **2A** consisting of the central part with circular arc **2a** and two tangential planes adjoined thereto **2c**, **2c** and the side parts with circular arcs **2d**, **2d**, and a plane member **2B** consisting of the plane central parts **2e** and the both side parts **2d'**, **2d'** with same circular arc. The inner curvature formed by parts **2d** and **2d'** was destined so as to fit that of the tubular light source **4** by this combination. The thickness of both members **2A** and **2B** was 1 mm. Dotting **5,5** ... by white paint was applied to the inner surface of the central part **2e** of the member **2B**.

A light reflecting sheet 3 was sticked on the backside the plane central part **2e** of the member **2B**. A light scattering plate **7** was equipped at the front position of the central part of the member **2A** and attached to the sheet **3** with an adhesive. And the both members were fixed with a light reflecting tape **3'** by encompassing the both edges of the sheet **3** and the plate **7** at their both sides **2d** and **2d'**, respectively.

As the reference, the dimension of this surface-lighting body was as follows:---

Breadth(A):160 mm

Length(Perpendicular toward the paper):220 mm

Thickness(b):10 mm

Then two cathode discharge tubes **4**, **4** were set into the side parts **2d-2d'**,**2d-2d'**, as in this Fig.22, and the luminosity was measured in the same manner as described in Embodiment 1 to give 1500 $^{cd}$/m$^2$ of the averaged luminosity and 88 % of homogenity in the luminance.

### Embodiment 5

In the immediately above Embodiment, dots for diffuse reflection were printed onto the inner face of the concave-plane member **2A**. Then, the luminosity and homogenity were increased up to 1800 $^{cd}$/m$^2$ and 91%.

### Embodiment 6

In the above Embodiment 5, a light reflecting sheet **3** was sticked up to the concave-plane member **2A** and further a light-scattering plate **7** was disposed to the plane member **2B**. There was obtained similar result comparable with Embodiments 1 to 3, of the average luminosity 2100 $^{cd}$/m$^2$ with 93 % homogenity.

### Embodiment 7

In the above Example 4, further disposed a fine prismatic plate, called "SOLF"(furnished by Sumitomo Three-M Co., Ltd.) under the light-scattering plate **7** so that the prismatic face looks upward. The luminosity obtained was 2050 $^{cd}$/m$^2$ with 85 % average homogenity.

### Embodiment 8

In the above Embodiment 6, SOLF was disposed under the light-scattering plate **7** to give 2400 $^{cd}$/m$^2$ of the average luminosity with 91 % homogenity.

### Embodiment 9

In the above Embodiment 6, the plane member **2B** was substituted with SOLF which looks upward. The luminosity observed was 2400 $^{cd}$/m$^2$ with 89 % homogenity.

It is recognizable from the above Embodiments 7 to 9 that the complementary use of fine prismatic plate will be effective to improve the luminosity, but glittering tends to increase as compared with sole use of the scattering plate.

As explained and embodied hereinabove, the present invention has resulted in the resolution of the generation of the brilliant line in the known symmetric wedge-shape light-guiding panel whereby there can be provided a new light-guiding panel having an averaged high luminosity with high homogenity and a broad image are as well as new surface-lighting body derived from said new panel.

Moreover, the present invention is not only effective in deadweight of the light-guiding panel to about one-half or more as compared with that of known plate-like light-guiding panel but also contribute to downsizing of image-expression system by disposing an electronic device such as IC substrate into the space of its concavity.

### Claims

1. A light-guiding panel (2) for surface-lighting, the panel (2) being made of optically transparent material and having a light-reflecting face ($S_R$), an opposite light-emitting face ($S_E$), and ends from which light can be directed along a light axis parallel with the panel (2), the panel (2) being thinnest at the middle mid-way between its ends, at least one of the said faces ($S_R$, $S_E$) being a synthesized face consisting of two plane portions adjoining a middle concave portion so as to give a symmetric sectional form in a cutting plane which includes the light axis and is perpendicular to the panel (2), an outline of the said symmetric sectional form including (i) two oppositely disposed straight lines (AG,EF) inclined with respect to the light axis and each extending in a direction from an outer end point (A,E) at one said end toward a middle point (C) and (ii) an arcuate portion (GHF) whose ends (G,F) are adjoined to the corresponding ends (G,F) of the inclined straight lines (AG,EF), characterised in that:

    the inclined straight lines (AG,EF) are tangential to the arcuate portion (GHF);
    the said outline has a geometrical condition defined as follows: provided that the following points are given, that is, a middle intersection point (C) at which two hypothetical lines (GC,FC) prolonged from the respective inclined straight lines (AG,EF) intersect each other, and respective intersection points (B,D) of a straight line which passes through the middle intersection point (C) and is parallel to the light axis and straight lines (AB, DE) which pass through the respective outer end points (A,E) and are perpendicular to the light axis, then two pairs of three points (CAB,CED) give two hypothetical right-angled triangles ($\triangle$CAB,$\triangle$CED) which are congruent and are disposed mirror-symmetrically with confronting acute apexes (C); and
    the length of each hypothetical line (GC,FC) is not less than 1/10 and not more than 2/3 of the length of the

EP 0 520 623 B1

hypotenuse (CA,CE) of each hypothetical right-angled triangle (ΔCAB,ΔCED).

2. A light-guiding panel as claimed in claim 1, in which the length of each hypothetical line (GC,FC) is not less than 1/5 of the length of the hypotenuse (CA,CE).

3. A light-guiding panel as claimed in claim 1 or 2, in which the arcuate portion (GHF) is a curve line selected from: conical arcs such as a circular arc, a parabolic arc, a hyperbolic arc, an elliptic arc, curves of a trigonometric function, a catenary (hyperbolic cosine) curve, a cycloid curve, a trocoid curve, an exponential function curve, and an involute curve.

4. A light-guiding panel as claimed in claim 3, in which the curve line is a circular arc or a parabolic arc.

5. A light-guiding panel as claimed in any preceding claim, in which the panel (2) is hollow.

6. A light-guiding panel as claimed in any preceding claim, in which one of the faces is plane.

7. A light-guiding panel as claimed in any preceding claim, in which the light-reflecting face ($S_R$) is provided with white dots.

8. A light-guiding panel as claimed in any preceding claim, in which the said ends of the panel have symmetric through-holes for receiving cold cathode discharge tubes.

9. A surface-lighting assembly comprising a light-guiding panel according to any preceding claim.

**Patentansprüche**

1. Lichtleiterplatte (2) zur Flächenbeleuchtung, wobei die Platte (2) aus einem optisch transparenten Material besteht und aufweist: eine lichtreflektierende Fläche ($S_R$), eine gegenüberliegende lichtemittierende Fläche ($S_E$), und Enden, aus denen das Licht längs einer Lichtachse parallel zur Platte (2) gerichtet werden kann, wobei die Platte (2) in der Mitte auf halbem Weg zwischen ihren Enden am dünnsten ist, wobei mindestens eine der Flächen ($S_R$, $S_E$) eine synthetisch hergestellte Fläche ist, die aus zwei ebenen Abschnitten besteht, die an einen mittleren konkaven Abschnitt angrenzen, um somit eine symmetrische Schnittform in einer Schnittebene zu liefern, die die Lichtachse umfaßt und senkrecht zur Platte (2) verläuft, wobei ein Umriß der symmetrischen Schnittform umfaßt: (i) zwei gegenüberliegend angeordnete gerade Linien (AG, EF), die mit Bezugnahme auf die Lichtachse geneigt sind, und die sich jeweils in einer Richtung von einem äußeren Endpunkt (A, E) an einem Ende in Richtung eines mittleren Punktes (C) erstrecken, und (ii) einen bogenförmigen Abschnitt (GHF), dessen Enden (G, F) an die entsprechenden Enden (G, F) der geneigten geraden Linien (AG, EF) angrenzen, dadurch gekennzeichnet, daß:

   die geneigten geraden Linien (AG, EF) tangential zum bogenförmigen Abschnitt (GHF) verlaufen;
   der Umriß einen geometrischen Zustand aufweist, der wie folgt definiert wird: vorausgesetzt, daß die folgenden Punkte gegeben sind, d.h., ein mittlerer Schnittpunkt (C), in dem zwei hypothetische Linien (GC, FC), die von den entsprechenden geneigten geraden Linien (AG, EF) aus verlängert werden, einander schneiden, und die entsprechenden Schnittpunkte (B, D) einer geraden Linie, die durch den mittleren Schnittpunkt (C) hindurchgeht und parallel zur Lichtachse verläuft, und der geraden Linien (AB, DE), die durch die entsprechenden äußeren Endpunkte (A, E) hindurchgehen und senkrecht zur Lichtachse verlaufen, dann ergeben zwei Paare von drei Punkten (CAB, CED) zwei hypothetische rechtwinklige Dreiecke (ΔCAB, ΔCED), die kongruent und spiegelsymmetrisch mit den gegenüberliegenden spitzwinkeligen Scheitelpunkten (C) angeordnet sind; und die Länge einer jeden hypothetischen Linie (GC, FC) nicht kleiner ist als 1/10 und nicht größer als 2/3 der Länge der Hypotenuse (CA, CE) eines jeden hypothetischen rechtwinkeligen Dreieckes (ΔCAB, ΔCED).

2. Lichtleiterplatte nach Anspruch 1, bei der die Länge einer jeden hypothetischen Linie (GC, FC) nicht kleiner ist als 1/5 der Länge der Hypotenuse (CA, CE).

3. Lichtleiterplatte nach Anspruch 1 oder 2, bei der der bogenförmige Abschnitt (GHF) eine Kurvenlinie ist, die ausgewählt wird unter:
   konischen Bogen, wie beispielsweise einem kreisförmigen Bogen, einem parabolischen Bogen, einem hyperbolischen Bogen, einem elliptischen Bogen, Kurven einer trigonometrischen Funktion, einer Kettenlinienkurve (hyperbolischer Kosinus), einer Zykloidenkurve, einer Trochoidenkurve, einer exponentiellen Funktionskurve und einer Evolventen.

4. Lichtleiterplatte nach Anspruch 3, bei der die Kurvenlinie ein kreisförmiger Bogen oder ein parabolischer Bogen ist.

5. Lichtleiterplatte nach einem der vorhergehenden Ansprüche, bei der die Platte (2) hohl ist.

6. Lichtleiterplatte nach einem der vorhergehenden Ansprüche, bei der eine der Flächen eben ist.

7. Lichtleiterplatte nach einem der vorhergehenden Ansprüche, bei der die lichtreflektierende Fläche ($S_R$) mit weißen Punkten versehen ist.

8. Lichtleiterplatte nach einem der vorhergehenden Ansprüche, bei der die Enden der Platte symmetrische Durchgangslöcher für das Aufnehmen von Kaltkatodenentladungsröhren aufweisen.

9. Flächenbeleuchtungsbaugruppe, die eine Lichtleiterplatte nach einem der vorhergehenden Ansprüche aufweist.

## Revendications

1. Panneau de guidage de la lumière (2) pour un éclairage de surface, le panneau (2) étant composé de matériau optiquement transparent et comportant une face de réflexion de la lumière ($S_R$), une face opposée d'émission de la lumière ($S_E$) et des extrémités à partir desquelles la lumière peut être dirigée le long d'un axe de lumière parallèle au panneau (2), le panneau (2) étant le moins épais au niveau du milieu, à mi-chemin entre ses extrémités, au moins une desdites faces ($S_R$, $S_E$) étant une face synthétisée composée de deux parties planes reliées à une partie concave médiane, de sorte à donner une forme de section symétrique dans un plan de coupe englobant l'axe de lumière, et perpendiculaire au panneau (2), un contour de ladite forme de section symétrique englobant (i) deux lignes droites agencées de part et d'autre (AG, EF), inclinées par rapport à l'axe de lumière et s'étendant chacune dans une direction à partir d'un point d'extrémité externe (A, E) au niveau d'une dite extrémité vers un point médian (C), et (ii) une partie arquée (GHF) dont les extrémités (G, F) sont reliées aux extrémités correspondantes (G, F) des lignes droites inclinées (AG, EF), caractérisé en ce que:

les lignes droites inclinées (AG, AF) sont tangentielles à la partie arquée (GHF);
ledit contour a un état géométrique défini comme suit: à condition que les points suivants soient établis, à savoir un point d'intersection médian (C) au niveau duquel deux lignes hypothétiques (GC, FC) prolongées à partir des lignes droites inclinées respectives (AG, EF) se coupent, des points d'intersection respectifs (B, D) d'une ligne droite traversant le point d'intersection médian (C), et parallèle à l'axe de la lumière, et des lignes droites (AB, DE) traversant les points d'extrémité externes respectifs (A, E) et perpendiculaires à l'axe de lumière, alors deux paires de trois points (CAB, CED) donnent deux triangles hypothétiques à angles droits ($\Delta$CAB, $\Delta$CED), qui coïncident et sont agencés à symétrie spéculaire avec les sommets aigus qui y font face (C); et
la longueur de chaque ligne hypothétique (GC, FC) ne représente pas moins de 1/10 et pas plus des 2/3 de la longueur de l'hypoténuse (CA, CE) de chaque triangle hypothétique à angles droits ($\Delta$CAB, $\Delta$CED).

2. Panneau de guidage de la lumière selon la revendication 1, dans lequel la longueur de chaque ligne hypothétique (GC, FC) ne représente pas moins de 1/5 de la longueur de l'hypoténuse (CA, CE).

3. Panneau de guidage de la lumière selon les revendications 1 ou 2, dans lequel la partie arquée (GHF) est une ligne courbe, choisie parmi:

des arcs coniques, par exemple un arc circulaire, un arc parabolique, un arc hyperbolique, un arc elliptique, des courbes d'une fonction trigonométrique, une courbe caténaire (cosinus hyperbolique), une courbe cycloïde, une courbe trocchoïde, une courbe de fonction exponentielle et une courbe développante.

4. Panneau de guidage de la lumière selon la revendication 3, dans lequel la ligne courbe est un arc circulaire ou un arc parabolique.

5. Panneau de guidage de la lumière selon l'une quelconque des revendications précédentes, dans lequel le panneau (2) est creux.

6. Panneau de guidage de la lumière selon l'une quelconque des revendications précédentes, dans lequel une des faces est plane.

7. Panneau de guidage de la lumière selon l'une quelconque des revendications précédentes, dans lequel la face de réflexion de la lumière ($S_R$) comporte des points blancs.

8. Panneau de guidage de la lumière selon l'une quelconque des revendications précédentes, dans lequel lesdites extrémités du panneau comportent des trous de passage symétriques pour recevoir des tubes de décharge à cathode froide.

9. Assemblage d'éclairage de surface comprenant un panneau de guidage de la lumière selon l'une quelconque des revendications précédentes.

Fig.1

Fig.2

Fig.3

Fig.4

Fig.5

Fig.6

(cm)

Fig.7

Fig.8

Fig.9

Fig.10

Fig.11

Fig.12

Fig.13

Fig.14

Fig.15

Fig.16

L

S_E

4

2

S_R

4

Fig.17

S_E

4

L

4

2

S_R

Fig.18

Fig.19

Fig. 20

Fig. 21

Fig. 22